Europäisches Patentamt

European Patent Office

Office européen des brevets

(19)

(11) **EP 1 100 703 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(51) Int Cl.⁷: **B60T 7/04**, B60T 7/12, B60T 13/66

(21) Anmeldenummer: **98943808.0**

(22) Anmeldetag: **31.07.1998**

(86) Internationale Anmeldenummer:
**PCT/EP1998/004790**

(87) Internationale Veröffentlichungsnummer:
**WO 2000/007859 (17.02.2000 Gazette 2000/07)**

(54) **VORRICHTUNG UND VERFAHREN ZUM ANSTEUERN EINER KRAFTFAHRZEUGBREMSANLANGE**

DEVICE AND METHOD FOR CONTROLLING A BRAKING SYSTEM IN A MOTOR VEHICLE

DISPOSITIF ET PROCEDE POUR COMMANDER UN SYSTEME DE FREINAGE DE VEHICULE A MOTEUR

(84) Benannte Vertragsstaaten:
**DE FR IT**

(43) Veröffentlichungstag der Anmeldung:
**23.05.2001 Patentblatt 2001/21**

(73) Patentinhaber: **Continental Teves AG & Co. oHG
60488 Frankfurt (DE)**

(72) Erfinder: **DRUMM, Stefan
D-55291 Saulheim (DE)**

(56) Entgegenhaltungen:
**DE-A- 19 607 048          DE-A- 19 608 616
DE-A- 19 629 229          DE-C- 4 413 172**

**Beschreibung**

Die Erfindung betrifft eine Vorrichtung und ein Verfahren zum Ansteuern einer Kraftfahrzeugbremsanlage, die eine Beeinflussung des Bremsvorgangs durch Fahreraktionen erlauben, welche vor der Bremspedalbetätigung erfolgt sind.

Herkömmlich ausgebildete Bremsanlagen für Kraftfahrzeuge verwenden als Maß für den Bremsvorgang die Betätigung eines Bremspedals durch den Fahrer. Infolgedessen setzt sich die erforderliche Bremszeit aus verschiedenen Faktoren zusammen. Nach dem Eintritt des Ereignisses läuft zunächst eine sogenannte Wahrnehmungszeit ab (z.B. 100 ms). Anschließend erfolgt eine gewisse Zeit für die mentale Verarbeitung der wahrnehmung (z.B. 700 ms), dann erfolgt die Fußbewegung des Fahrers (z.B. 200 ms). Die vorgenannten Zeiten werden beispielsweise durch die Ermüdung des Fahrers, durch Alkoholeinwirkung und/oder durch eine entsprechende Fahrerunaufmerksamkeit mehr oder weniger stark beeinflußt, so daß es häufig zu einer unnötigen Verzögerung zwischen dem eigentlichen Ereignis, aufgrund dessen eine Bremsung erfolgen soll, und der tatsächlichen Abbremsung des Fahrzeugs kommt. Einen Ansatz zur Lösung dieses Problems ist in der WO 95/01898 beschrieben. Gemäß dieser Druckschrift wird die Position des rechten Fußes des Fahrers erfaßt, wobei bei einer schnellen Änderung der Position des rechten Fußes von dem Gaspedal in Richtung auf das Bremspedal auf die Notwendigkeit einer zwangsläufigen Durchführung eines Bremsvorgangs geschlossen wird.

Dieser Stand der Technik hat jedoch den Nachteil, daß zunächst eine zusätzliche Sensorik im Fußraum des Fahrzeugs notwendig ist. Hierbei können beispielsweise Näherungssensoren eingesetzt werden, die jedoch den Nachteil haben, daß eventuell auch Fahreraktionen, die keine Betätigung eines Bedienelements des Fahrzeugs darstellen, fälschlicherweise als solche interpretiert werden. Dadurch kann eventuell ein Bremsvorgang auch ohne eine explizite Betätigung des Bremspedals eingeleitet werden. Weiterhin sind Näherungssensoren teuer und oftmals nicht sehr zuverlässig. Würde etwa beispielsweise ein Gegenstand so in den Fußraum des Fahrzeugs fallen, daß der Näherungssensor ein entsprechendes Signal abgibt, so könnte es ohne eine Veranlassung zu einer Vollbremsung führen.

In der Druckschrift DE 44 13 172 C ist die Ansteuerung einer Bremsanlage gemäß dem Oberbegriff der Ansprüche 1 und 15 beschrieben, wobei eine Modifikation des Schwellwertes für die Bremspedalbetätigungsgeschwindigkeit abhängig von der Zeitdauer zwischen Leerlaufstellung des Gaspedals und Bremspedalbetätigung erfolgt.

Es ist eine Aufgabe der Erfindung, eine Vorrichtung und ein Verfahren zum Ansteuern einer Kraftfahrzeugbremsanlage zu schaffen, die eine kostengünstige und zuverlässige Beeinflussung eines Fremdbremsvorgangs der Kraftfahrzeugbremsanlage realisieren.

Diese Aufgabe wird gemäß den Merkmalen der unabhängigen Patentansprüche gelöst.

Erfindungsgemäß ist eine Vorrichtung zum Ansteuern einer Kraftfahrzeugbremsanlage vorgesehen, die einen Gaspedalsensor zur Erfassung einer Gaspedalstellung und einen Bremspedalsensor zur Erfassung einer Bremspedalbetätigung enthalten kann. Weiterhin kann die Vorrichtung gemäß der Erfindung eine Steuereinheit aufweisen, die die Kraftfahrzeugbremsanlage ansteuert. Diese Steuereinheit kann dann basierend auf Signalen des Gaspedalsensors, des Bremspedalsensors und eines beispielsweise in der Steuereinheit enthaltenen Zeiterfassungsglieds die Kraftfahrzeugbremsanlage entsprechend ansteuern. Erfindungsgemäß kann die Steuereinheit über das Zeiterfassungsglied eine Zeitdauer T erfassen, die zwischen einer von dem Gaspedalsensor erfaßten Nullstellung des Gaspedals und einer von dem Bremspedalsensor erfaßten Betätigung des Bremspedals verstreicht, und abhängig von der erfaßten Zeitdauer T den Bremsvorgang der Kraftfahrzeugbremsanlage beeinflussen, wobei die Steuereinheit einen Bremsassistenten fremdauslöst wenn die erfaßte Zeitdauer T unterhalb einer vorbestimmten Zeitdauer $T_{grenz1}$ liegt.

Erfindungsgemäß kann somit aus dem Verhalten des Fahrers unmittelbar vor einer Bremsung darauf geschlossen werden, wie kritisch die Fahrsituation ist. Dadurch steht bereits vor Beginn des Bremsdruckaufbaus ein Maß für die zu erwartende Intensität der nachfolgenden Bremsung zur Verfügung. Dadurch kann der Bremsweg des Fahrzeugs in wirksamer Weise verkürzt werden.

Die abhängigen Patentansprüche geben vorteilhafte Ausführungsformen und Weiterentwicklungen der Erfindung an.

Gemäß einer Ausführungsform kann der Bremspedalsensor einen Bremspedalweg bzw. einen Betätigungsweg des Bremspedals erfassen. Es kann jedoch auch ein Bremspedalwegsensor und/oder ein Bremspedalkraftsensor vorgesehen sein, die den Betätigungsweg und/oder die Betätigungskraft des Bremspedals erfassen. Wird nun über den Bremspedalsensor, den Bremspedalwegsensor und/oder den Bremspedalkraftsensor eine Berührung des Bremspedals durch den Fahrerfuß erfaßt, so kann die Kraftfahrzeugbremsanlage in einen Bereitschaftszustand gebracht werden. Der Bereitschaftszustand kann etwa durch Anlegen eines Vordrucks in der Kraftfahrzeugbremsanlage erzeugt werden. Hierbei kann der Vordruck der Kraftfahrzeugbremsanlage so eingestellt werden, daß sich noch keine signifikante Verzögerung des Fahrzeugs ergibt, wobei jedoch eine optimale Reaktionszeit der Kraftfahrzeugbremsanlage gewährleistet ist. Wird nun über die obengenannten Sensoren ein Betätigungsweg und/oder eine Betätigungskraft des Bremspedals erfaßt, so kann ein Bremsvorgang ausgelöst werden.

Durch die obengenannte Ausführungsform wird das Kraftfahrzeug erst dann verzögert, wenn der Fahrer seinen Willen zur Verzögerung des Fahrzeugs in Form eines Bedienwegs bzw. einer Bedienkraft des Bremspedals ausdrückt. Da nicht auszuschließen ist, daß sich außer dem Fahrerfuß auch andere Gegenstände im Fußraum des Fahrzeugs befinden und bewegen, kann durch ein Unterscheiden zwischen einer Berührung des Bremspedals und einer tatsächlichen Betätigung desselben ein weiterer Sicherheitsfaktor eingeführt werden. Zum einen wird das Kraftfahrzeugbremssystem bei einer Berührung des Bremspedals in eine Bereitschaftstellung gebracht und so auf einen möglicherweise unmittelbar bevorstehenden Fahrereingriff vorbereitet. Andererseits wird die Bremsung erst dann eingeleitet, wenn der unmißverständliche Fahrerwunsch in Form eines Betätigungswegs oder einer Betätigungskraft vorliegt. Es sei angemerkt, daß der Betätigungskraftsensor anstatt des Bremspedalwegsensors eingesetzt werden kann. Natürlich kann der Bremspedalsensor auch sämtliche erforderliche Funktionen, wie eine Erfassung einer Bremspedalberührung, eine Erfassung des Bremspedalwegs und/oder eine Erfassung der Bremspedalkraft ausführen.

Gemäß einer weiteren Ausführungsform kann die Fahrstufe eines Automatikgetriebes, sofern vorhanden, heruntergeschaltet werden. Dadurch kann das Schleppmoment des Automatikgetriebes erhöht werden, so daß die Bremswirkung weiter unterstützt wird.

Gemäß einer weiteren Ausführungsform kann dann, wenn die erfaßte Zeitdauer T zwischen der vorbestimmten Zeitdauer $T_{grenz1}$ und einer vorbestimmten Zeitdauer $T_{grenz2}$ liegt, wobei $T_{grenz2}$ größer ist als $T_{grenz1}$, eine Vorfüllung der Bremsanlage vorgenommen werden. Durch eine derartige Vorfüllung kann der Leerweg der Bremsbacken minimiert werden, so daß eine optimale Reaktion der Bremsanlage erreicht werden kann. Die Vorfüllung kann auch unterschiedlich groß gewählt werden, abhängig beispielsweise von der erfaßten Zeitdauer T.

Weiterhin kann eine Adaption der Schaltschwellen des Bremsassistenten erfolgen. Die Schaltschwellen des Bremsassistenten werden beispielsweise durch den Bremspedalweg und die Bremspedalgeschwindigkeit bestimmt, d.h. daß ab einer bestimmten Bremspedalgeschwindigkeit und einem bestimmten Bremspedalweg eine Schaltschwelle überschritten ist, so daß der Bremsassistent seine Funktion aufnimmt und einen Fremdbremsvorgang durchführt. würde der Fahrer etwa in einer Zeitdauer, die zwischen $T_{grenz1}$ und $T_{grenz2}$ liegt, von dem Gaspedal zum Bremspedal wechseln und würde er dann das Bremspedal sehr langsam niederdrücken, so würde keine Bremsassistentaktivierung erfolgen, da die Schaltschwelle des Bremsassistenten nicht überschritten wurde.

Gemäß weiteren Ausführungsformen kann eine Adaption der pedalkraftproportionalen Verzögerung und/oder eine Adaption eines abstandsabhängigen Bremsassistenten erfolgen.

Die obengenannten Adaptionen sind zunächst abhängig von der erfaßten Zeitdauer zwischen der Endstellung des Gaspedals (Gaspedal vollständig gelöst) und dem Betätigen des Bremspedals. Die Abhängigkeit kann dahingehend sein, daß bei Erreichen einer Zeitdauer von $T_{grenz2}$ die Adaption am geringsten oder gleich Null ist und bei dem Erfassen einer Zeitdauer nahe oder gleich $T_{grenz1}$ eine maximale Adaption erfolgt. Eine derartige maximale oder geringere Adaption kann beispielsweise dadurch erfolgen, daß die Schaltschwellen des Bremsassistenten verringert werden. Weiterhin kann beispielsweise ein Pedalkraft-Proportionalitätsfaktor erhöht werden und/oder es ist möglich, die Bremskraft in Relation zu einem erfaßten Abstand zu erhöhen.

Zusätzlich zu der gerade genannten Adaption ist es möglich, sozusagen eine weitere Adaptionsgröße hinzuzunehmen, und zwar eine Adaption, die sich aus der Fahrzeuggeschwindigkeit, der Gaspedalstellung vor Zurücknahme des Gaspedals, und/oder der Gaspedallösegeschwindigkeit ergibt. Wird beispielsweise eine sehr hohe Gaspedallösegeschwindigkeit erfaßt, so würde eine stärkere Adaption erfolgen. Beispielsweise würde dann die Bremsassistent-Schaltschwelle weiter verringert werden (zusätzlich zu der Abhängigkeit der Adaption der Bremsassistent-Schaltschwelle von der erfaßten Zeitdauer). Dasselbe gilt für die Adaptionen der pedalkraftproportionalen Verzögerung und der abstandsabhängigen Bremsassistentfunktion.

Gemäß einer weiteren Ausführungsform der Erfindung kann zudem der Signalverlauf der Bremspedalbetätigung ausgewertet werden, wobei abhängig von der Bremspedalstellung, der Bremspedalniederdrückgeschwindigkeit und/oder der Bremspedalkraft eine zusätzliche Adaption der obengenannten Werte und Funktionen durchgeführt werden.

An dieser Stelle sei angemerkt, daß, sofern gewünscht, auch bei einer erfaßten Zeitdauer T, die kleiner ist als $T_{grenz1}$ eine Schaltschwellenüberschreitung des Bremsassistenten notwendig sein kann, um den Bremsassistenten fremdauszulösen.

Weitere vorteilhafte Ausführungsformen der Erfindung werden im folgenden anhand von beispielhaften schematischen Zeichnungen näher erläutert. Es zeigen:

Fig. 1          eine schematische Darstellung der erfindungsgemäßen vorrichtung und

Fig. 2 bis 4    Flußlaufpläne, die eine erfindungsgemäße Beeinflussung des Bremsvorgangs darstellen.

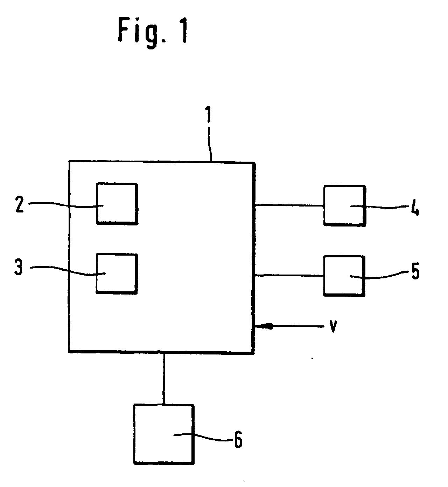

Die Fig. 1 zeigt eine Steuereinheit 1 mit einem Kennfeld 2 und einem Zeiterfassungsglied 3. Weiterhin sind ein Bremspedalsensor 4 und ein Gaspedalsensor 5 dargestellt, deren Signale der Steuereinheit 1 zugeführt werden. Die Steuereinheit 1 erhält weiterhin ein Signal v über die aktuelle Kraftfahrzeuggeschwindigkeit. Weiterhin ist ein Bremskraftverstärker 6 gezeigt, der von der Steuereinheit 1 angesteuert werden kann. Der Bremskraftverstärker 6 kann beispielsweise als aktiver Booster ausgebildet sein. An dieser Stelle sei angemerkt, daß anstatt des Kennfelds 2 auch eine entsprechende Berechnung erfolgen kann. Weiterhin ist es nicht erfindungswesentlich, daß das Zeiterfassungsglied 3 in der Steuereinheit 1 enthalten ist. Das Zeiterfassungsglied 3 könnte auch als separates Bauteil vorgesehen sein; dasselbe gilt auch für das Kennfeld 2.

Das Signal betreffend der aktuellen Kraftfahrzeuggeschwindigkeit v kann über einen nicht dargestellten Sensor ermittelt werden. Die Steuereinheit 1 kann weiterhin eine elektronische Steuereinheit sein, die in die Steuereinheit des Bremskraftverstärkers integriert ist. Natürlich könnte die Steuereinheit 1 auch als separates Bauteil vorgesehen sein.

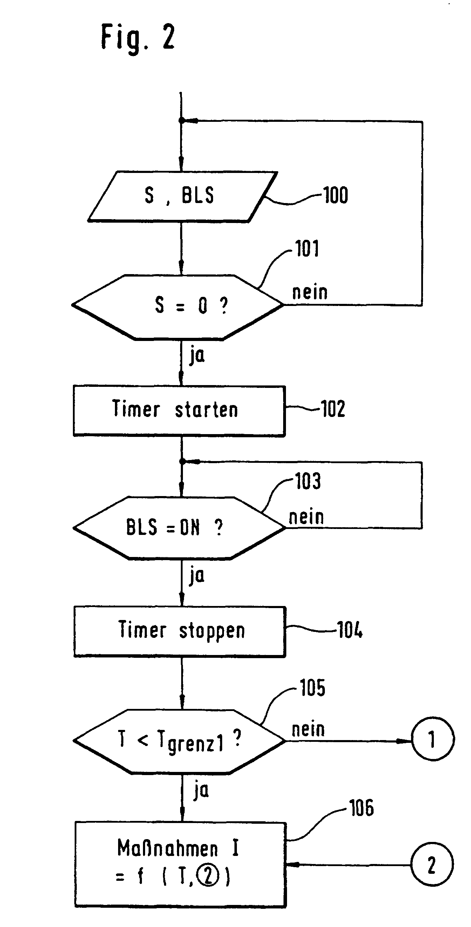

im folgenden wird anhand der Flußlaufpläne der Fig. 2 bis 4 ein Beispiel einer erfindungsgemäßen Abarbeitung dargestellt.

In einem Schritt 100 werden die Signale des Gaspedalsensors 5 und die Signale des Bremspedalsensors 4 erfaßt. Bei dem Signal des Bremspedalsensors 4 kann es sich beispielsweise um den Bremslichtschalter BLS handeln. In einem Schritt 101 wird abgefragt, ob das Signal des Gaspedalsensors 5 Null ist oder nicht. Wenn das Signal des Gaspedalsensor Null ist, bedeutet dies, daß das Gaspedal nicht mehr von dem Fahrer niedergedrückt wird. In diesem Fall wird in einem Schritt 102 ein Timer bzw. das Zeiterfassungsglied 3 gestartet. Ergibt die Abfrage im Schritt 101, daß das Gaspedal noch vom Fahrer niedergedrückt wird, so verzweigt die Abfrage im Schritt 101 zurück zu dem Ablaufplan vor dem Schritt 100.

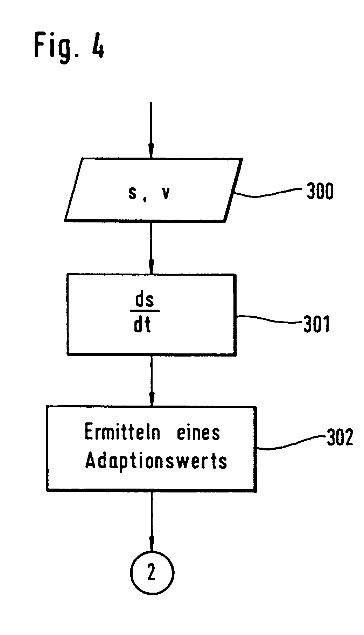

Nachdem der Timer im Schritt 102 gestartet wurde, wird in einem Schritt 103 abgefragt, ob der Bremslichtschalter BLS einen ON-Zutand einnimmt. Ist das der Fall, so kann daraus geschlossen werden, daß das Bremspedal betätigt wird. In diesem Fall wird in einem Schritt 105 bestimmt, welcher Wert des Zeiterfassungsglieds 3 (bzw. des Timers) beim Stoppen des Timers bzw. bei der Betätigung des Bremspedals durch den Fahrer vorliegt. Ergibt die Abfrage im Schritt 103, daß der Bremslichtschalter BLS nicht betätigt wird, so verzweigt die Abfrage im Schritt 103 zwischen die Schritte 102 und 103. Wenn im Schritt 105 ermittelt wird, daß die erfaßte Zeitdauer T kleiner ist als eine vorbestimmte Zeitdauer $T_{grenz1}$, so werden in einem Schritt 106 vorbestimmte Maßnahmen I durchgeführt. Diese Maßnahmen bestehen beispielsweise aus einer Fremdauslösung des Bremsassistenten und aus einem Herunterschalten des Automatikgetriebes. Die Maßnahmen im Schritt 106 können von der erfaßten Zeitdauer T und von der in Fig. 4 dargestellten Ermittlung abhängig sein. Es ist jedoch auch möglich, daß (anders als im Schritt 106 dargestellt) die Maßnahmen I weder von T noch von der Ermittlung gemäß der Fig. 4 abhängig sind, da bei einem Unterschreiten der vorbestimmten Zeitdauer $T_{grenz1}$ durch die erfaßte Zeitdauer T in jedem Fall eine Maximalbremsung erfolgen soll. Eine derartige Maximalbremsung würde dann bis in den Regelbereich des Antiblockiersystems hineinreichen.

Wenn im Schritt 105 ermittelt wird, daß die erfaßte Zeitdauer zwischen der vorbestimmten Zeitdauer $T_{grenz1}$ und der vorbestimmten Zeitdauer $T_{grenz2}$ liegt, so werden die Maßnahmen II gemäß dem Schritt 201 durchgeführt. Zur Durchführung der Maßnahmen gemäß dem Schritt 201 werden Werte benötigt, die anhand der Fig. 4 im folgenden beschrieben werden sollen.

Die Fig. 4 zeigt in einem Schritt 300 die Erfassung der Gaspedalstellung s und die Erfassung der Kraftfahrzeuggeschwindigkeit v. Anschließend wird in einem Schritt 301 eine Ableitung der Gaspedalstellung s nach der Zeit durchgeführt und dadurch eine Gaspedallösegeschwindigkeit $\frac{ds}{dt}$ ermittelt.

In Abhängigkeit von der Gaspedalstellung s vor dem Beginn einer Zurücknahme des Gaspedals, der Gaspedallösegeschwindigkeit $\frac{ds}{dt}$ und der Fahrzeuggeschwindigkeit V vor der zurücknahme des Gaspedals kann dann in einem Schritt 302 über das Kennfeld 2 oder entsprechend einer geeigneten Berechnung ein weiterer Adaptionswert ermittelt werden, um den Bremsvorgang weiter zu optimieren. Dieser Adaptionswert kann beispielsweise ein Prozentsatz sein, um den etwa die Bremsassistentschaltschwelle weiter vermindert wird. Dieser weitere Adaptionswert wird dann in dem Schritt 201 und in einem Schritt 203 verwendet, um die Maßnahmen II und Maßnahmen III durchzuführen.

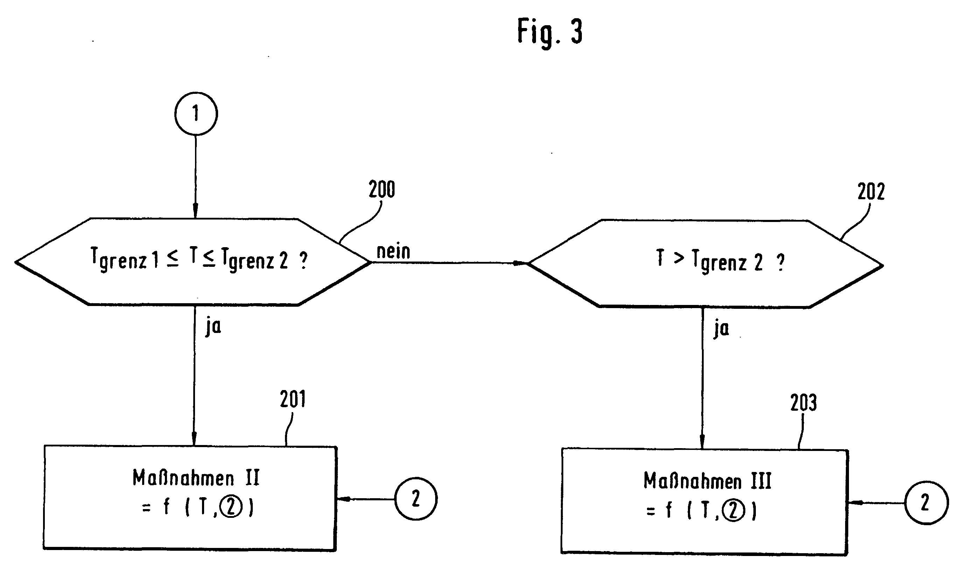

Wie in der Fig. 3 dargestellt ist, werden zur Durchführung der Maßnahmen II zum einen die erfaßte Zeitdauer T und zum anderen der Adaptionswert aus der Fig. 4 verwendet.

An dieser Stelle soll weiterhin angemerkt werden, daß anstatt des Bremslichtschalters BLS oder eines Löseschalters in Schritt 103 auch ein Berührungssensor am Bremspedal verwendet werden kann.

Der Schritt 201 stellt Maßnahmen II dar, die zwischen einer Notbremssituation (Maßnahmen I) und einer Normalbremsung (Maßnahmen III) liegen. Um so größer die erfaßte Zeitdauer T ist, um so wahrscheinlicher ist es, daß keine Notbremssituation vorliegt. Die Maßnahmen gemäß dem Schritt 201 können beinhalten, daß die Schaltschwellen des Bremsassistenten herabgesetzt werden (das bedeutet, es erfolgt ein früherer Regeleintritt). Die Herabsetzung wäre nahe der Zeitdauer $T_{grenz1}$ am größten und würde bei $T_{grenz2}$ das normale Niveau wieder erreichen. Weiterhin können die Maßnahmen gemäß dem Schritt 201 beinhalten, daß die Bremsanlage vorgefüllt werden, so daß beispielsweise die Bremsbacken schon an der Bremsscheibe anliegen und der Leerweg minimiert wird. Dies kann beispielsweise auch schon dadurch erfolgen, daß die Werte des Gaspedals (Gaspedalstellung vor Beginn der Zurücknahme des Gaspedals, Gaspedallösegeschwindigkeit) und/oder die Kraftfahrzeuggeschwindigkeit vor Zurücknahme des Gaspedals oder eventuell auch eine Kraftfahrzeuggeschwindigkeitsänderung nach der Zurücknahme des Gaspedals verwendet werden. Damit würde eine noch frühere Vorreaktion auf das Verhalten des Fahrers vor der Bremsung möglich werden.

Weiterhin könnte die Vorfüllung der Bremse mit einem bestimmten Druck erfolgen, der eine Funktion der erfaßten Zeitdauer ist (größere Zeit würde einen kleiner werdenden Druck bewirken).

Weiterhin kann im Schritt 201 eine pedalkraftproportionale Fahrzeugverzögerung verstärkt werden, d.h. die Verstärkung (Verzögerung zu Pedalkraft) würde von $T_{grenz1}$ zu $T_{grenz2}$ auf das bei pedalkraftproportionaler Verzögerung vorhandene Normalniveau abnehmen.

Weiterhin kann im Schritt 201 die Funktion eines abstandsabhängigen Bremsassistenten verstärkt werden, d.h., daß die Schaltschwellen des abstandsabhängigen Bremsassistenten, die bei $T_{grenz1}$ maximal herabgesetzt sind (d.h. früherer Regeleintritt) bis auf das normale Niveau bei $T_{grenz2}$ wieder angehoben werden, damit die Fahrerreaktion vor der Bremspedalbetätigung in die Ermittlung des Gefahrenpotentials (Notbremsung) herangezogen werden kann.

Darüber hinaus kann im Schritt 201 die momentan festgehaltene Fahrstufe weiterhin beibehalten werden, oder es kann das Motorschleppmoment leicht erhöht werden (beispielsweise durch das Zurückschalten um nur eine Fahrstufe).

Ist die Beurteilung der Abfrage gemäß Schritt 200, daß die erfaßte Zeitdauer T größer ist als die vorbestimmte Zeitdauer $T_{grenz2}$, so werden Maßnahmen III gemäß einem Schritt 203 durchgeführt, nach Durchlaufen eines Schrittes 202. Diese Maßnahmen III entsprechen keiner Notbremssituation. Hier kann die Bremsanlage unbeeinflußt gelassen werden oder sie kann eventuell nur mit einem sehr kleinen Druck vorgefüllt werden. Weiterhin kann das Automatikgetriebe wieder dazu veranlaßt werden, von der momentan festgehaltenen Fahrstufe auf eine höhere oder die höchste Fahrstufe zu wechseln, um zu einem normalen Verhalten des Automatikgetriebes zurückzukehren. Natürlich können auch hier eventuell weitere Vorgänge veranlaßt werden, die dann abhängig von der erfaßten Zeitdauer T und dem Fahrerverhalten (aus Fig. 4) sein können, wie im Schritt 203 angedeutet ist.

**Patentansprüche**

1. Vorrichtung zum Ansteuern einer Kraftfahrzeugbremsanlage, mit

   - einem Gaspedalsensor (5) zur Erkennung einer Gaspedalstellung,
   - einem Bremspedalsensor (4) zur Erfassung einer Bremspedalbetätigung,
   - einer Steuereinheit (1) zum Ansteuern der Kraftfahrzeugbremsanlage und
   - einem Zeiterfassungsglied (3), wobei die Steuereinheit (1) basierend auf Signalen des Gaspedalsensors (5), des Bremspedalsensors (4) und des Zeiterfassungsglieds (3) die Kraftfahrzeugbremsanlage ansteuert, wobei

   die Steuereinheit (1) mit dem Zeiterfassungsglied (3) eine Zeitdauer T erfaßt, die zwischen einer von dem Gaspedalsensor (5) erfaßten Nullstellung des Gaspedals und einer von dem Bremspedalsensor (4) erfaßten Betätigung des Bremspedals verstreicht, und abhängig von der erfaßten Zeitdauer T den Bremsvorgang der Kraftfahrzeugbremsanlage beeinflußt, **dadurch gekennzeichnet, daß** die Steuereinheit (1) einen Bremsassistenten fremdauslöst, wenn die erfaßte Zeitdauer T unterhalb einer vorbestimmten Zeitdauer $T_{grenz1}$ liegt.

2. Vorrichtung nach Anspruch 1, **dadurch gekennzeichnet, daß** der Bremsvorgang der Kraftfahrzeugbremsanlage abhängig von einer erfaßten Gaspedallösegeschwindigkeit $\frac{ds}{dt}$ ist.

3. Vorrichtung nach Anspruch 1 oder 2, **dadurch gekennzeichnet, daß** der Bremspedalsensor (4), ein Bremspedalwegsensor und/oder ein Bremspedalkraftsensor einen Betätigungsweg und/oder eine Betätigungskraft des Bremspedals erfassen.

4. Vorrichtung nach Anspruch 3, **dadurch gekennzeichnet, daß** die Steuereinheit (1) beim Erfassen einer Berührung des Bremspedals durch den Fahrerfuß die Kraftfahrzeugbremsanlage in einen Bereitschaftszustand bringt und beim Erfassen eines Betätigungswegs des Bremspedals einen Bremsvorgang auslöst.

5. Vorrichtung nach Anspruch 4, **dadurch gekennzeichnet, daß** die Steuereinheit (1) den Bereitschaftszustand der Kraftfahrzeugbremsanlage durch Anlegen eines Vordrucks in der Kraftfahrzeugbremsanlage erzeugt.

6. Vorrichtung nach Anspruch 1, **dadurch gekennzeichnet, daß** die Fahrstufe eines Automatikgetriebes heruntergeschaltet wird, wenn die erfaßte Zeitdauer T unterhalb der vorbestimmten Zeitdauer $T_{grenz1}$ liegt.

7. Vorrichtung nach Anspruch 1, **dadurch gekennzeichnet, daß** die Steuereinheit (1)

   - eine Vorfüllung der Bremsanlage und/oder
   - eine Adaption von Schaltschwellen des Bremsassistenten und/oder

- eine Adaption der pedalkraftproportionalen Verzögerung und/oder
- eine Adaption eines stabstandsabhängigen Bremsassistenten

veranlaßt, wenn die erfaßte Zeitdauer T zwischen der vorbestimmten Zeitdauer $T_{grenz1}$ und einer vorbestimmten Zeitdauer $T_{grenz2}$ liegt, wobei $T_{grenz2}$ größer ist als $T_{grenz1}$.

8. Vorrichtung nach Anspruch 7, **dadurch gekennzeichnet, daß** die Fahrstufe eines Automatikgetriebes beibehalten oder heruntergeschaltet wird, wenn die erfaßte Zeitdauer T zwischen der vorbestimmten Zeitdauer $T_{grenz1}$ und der vorbestimmten Zeitdauer $T_{grenz2}$ liegt.

9. Vorrichtung nach Anspruch 7, **dadurch gekennzeichnet, daß** die Vorfüllung der Bremsanlage, die Adaption der Schaltschwellen des Bremsassistenten, die Adaption der pedalkraftproportionalen Verzögerung und/oder die Adaption des abstandsabhängigen Bremsassistenten abhängig von einem Kennfeld (2) und/oder einer formelabhängigen Berechnung durchgeführt werden, wobei als Eingangsgrößen für das Kennfeld (2) und/oder der formelabhängigen Berechnung die erfaßte Zeitdauer T, die Fahrzeuggeschwindigkeit v, die Gaspedalstellung s, und/oder eine Gaspedallösegeschwindigkeit $\frac{ds}{dt}$ verwendet werden.

10. Vorrichtung nach Anspruch 9, **dadurch gekennzeichnet, daß** die Steuereinheit (1), bei kleiner werdender erfaßter Zeitdauer T, bei steigender Fahrzeuggeschwindigkeit v, bei einem großen Niederdrückbetrag s des Gaspedals vor Beginn der Zurücknahme des Gaspedals und/oder bei einer größer werdenden Gaspedallösegeschwindigkeit $\frac{ds}{dt}$ die Schaltschwellen des Bremsassistenten verringert.

11. Vorrichtung nach Anspruch 9 oder 10, **dadurch gekennzeichnet, daß** die Steuereinheit (1), bei kleiner werdender erfaßte Zeitdauer T, bei steigender Fahrzeuggeschwindigkeit v, bei einem großen Niederdrückbetrag s des Gaspedals vor Beginn der Zurücknahme des Gaspedals und/oder bei einer größer werdenden Gaspedallösegeschwindigkeit $\frac{ds}{dt}$ den Pedalkraft-Proportionalitätsfaktor erhöht.

12. Vorrichtung nach zumindest einem der Ansprüche 9 bis 11, **dadurch gekennzeichnet, daß** die Steuereinheit (1), bei kleiner werdender erfaßter Zeitauer T, bei steigender Fahrzeuggeschwindigkeit v, bei einem großen Niederdrückbetrag s des Gaspedals vor Beginn der Zurücknahme des Gaspedals und/oder bei einer größer werdenden Gaspedallösegeschwindigkeit $\frac{ds}{dt}$ die Bremskraft in Relation zu einem erfaßten Abstand zu einem vorausfahrenden Fahrzeug erhöht.

13. Vorrichtung nach zumindest einem der Ansprüche 7 bis 12, **dadurch gekennzeichnet, daß** mit ansteigender erfaßter Zeitdauer T, die zwischen der vorbestimmten Zeitdauer $T_{grenz1}$ und der vorbestimmten Zeitdauer $T_{grenz2}$ liegt, der Betrag

- der Vorfüllung der Bremsanlage,
- der Adaption der Schaltschwellen des Bremsassistenten,
- der Adaption der pedalkraftproportionalen Verzögerung

und/oder

- der Adaption des abstandsabhängigen Bremsassistenten vermindert wird und bei Erreichen der vorbestimmten Zeitdauer $T_{grenz2}$ einen Ausgangswert annimmt.

14. Vorrichtung nach zumindest einem der Ansprüche 1 bis 13, **dadurch gekennzeichnet, daß** die Steuereinheit (1) den Signalverlauf der Bremspedalbetätigung auswertet und abhängig von der Bremspedalstellung, der Bremspedalniederdrückgeschwindigkeit und/oder der Bremspedalkraft

- eine Adaption der Schaltschwellen des Bremsassistenten,
- eine Adaption der pedalkraftproportionalen Verzögerung und/oder
- eine Adaption eines abstandsabhängigen Bremsassistenten

veranlaßt.

15. Verfahren zum Ansteuern einer Kraftfahrzeugbremsanlage, bei dem

- ein Gaspedalsensor (5) eine Gaspedalstellung erfaßt,
- ein Bremspedalsensor (4) eine Bremspedalbetätigung erfaßt und
- eine Steuereinheit (1) die Kraftfahrzeugbremsanlage, basierend auf Signalen des Gaspedalsensors (5), des Bremspedalsensors (4) und eines Zeiterfassungsglieds (3) ansteuert,

wobei
die Steuereinheit (1) mit dem Zeiterfassungsglied (3) eine Zeitdauer T erfaßt, die zwischen einer von dem Gaspedalsensor (5) erfaßten Nullstellung des Gaspedals und einer von dem Bremspedalsensor (4) erfaßten Betätigung des Bremspedals verstreicht, und abhängig von der erfaßten Zeitdauer T den Bremsvorgang der Kraftfahrzeugbremsanlage beeinflußt, **dadurch gekennzeichnet, daß** die Steuereinheit (1) einen Bremsassistenten immer dann fremdauslöst, wenn die erfaßte Zeitdauer T unterhalb einer vorbestimmten Zeitdauer $T_{grenz1}$ liegt.

**Claims**

1. Device for actuating a motor vehicle brake system, including

   - an accelerator pedal sensor (5) for detecting an accelerator pedal position,
   - a brake pedal sensor (4) for sensing a brake pedal actuation,
   - a control unit (1) for actuating the motor vehicle brake system, and
   - a time-acquisition element (3), with the control unit (1) actuating the motor vehicle brake system based on signals of the accelerator pedal sensor (5), the brake pedal sensor (4) and the time-acquisition element (3),

   wherein the control unit (1) with the time-acquisition element (3) acquires a time period T passing between a zero position of the accelerator pedal sensed by the accelerator pedal sensor (5) and an application of the brake pedal sensed by the brake pedal sensor (4), and influences the braking operation of the motor vehicle brake system in dependence on the sensed time period T, **characterized in that** the control unit (1) independently triggers a brake assist system when the sensed time period T lies below a predetermined period $T_{limit1}$.

2. Device as claimed in claim 1, **characterized in that** the braking operation of the motor vehicle brake system depends on a sensed accelerator pedal release speed $\frac{ds}{dt}$.

3. Device as claimed in claim 1 or 2, **characterized in that** the brake pedal sensor (4), a brake pedal travel sensor and/or a brake pedal force sensor sense an actuating travel and/or an actuating force of the brake pedal.

4. Device as claimed in claim 3, **characterized in that** when it is sensed that the driver's foot touches the brake pedal, the control unit (1) causes the motor vehicle brake system to adopt a ready position and triggers a braking operation when an actuating travel of the brake pedal is sensed.

5. Device as claimed in claim 4, **characterized in that** the control unit (1) brings about the ready position of the motor vehicle brake system by applying a pilot pressure in the motor vehicle brake system.

6. Device as claimed in claim 1, **characterized in that** the driving position of an automatic transmission is shifted down when the sensed period T is below the predetermined period $T_{limit1}$.

7. Device as claimed in claim 1, **characterized in that** the control unit (1) causes

   - a prefilling of the brake system and/or
   - an adaptation of switching thresholds of the brake assist and/or
   - an adaptation of the deceleration proportional to pedal force and/or
   - an adaptation of a distance-responsive brake assist

   when the sensed period T ranges between the predetermined period $T_{limit1}$ and a predetermined period $T_{limit2}$, and $T_{limit2}$ exceeds $T_{limit1}$.

8. Device as claimed in claim 7, **characterized in that** the driving position of an automatic transmission is maintained or shifted down when the sensed period T lies between the predetermined period $T_{limit1}$ and the predetermined period $T_{limit2}$.

9. Device as claimed in claim 7, **characterized in that** the prefilling of the brake system, the adaptation of the switching thresholds of the brake assist, the adaptation of the deceleration proportional to pedal force, and/or the adaptation of the distance-responsive brake assist are executed in dependence on a performance graph (2) and/or a formula-responsive calculation, wherein the sensed period T, the vehicle speed v, the accelerator pedal position s, and/or an accelerator pedal release speed $\frac{ds}{dt}$ are used as input quantities for the performance graph (2) and/or the formula-responsive calculation.

10. Device as claimed in claim 9, **characterized in that** the control unit (1) reduces the switching thresholds of the brake assist when the sensed period T decreases, with a rising vehicle speed v, a great amount s of depression of the accelerator pedal before the commencement of release of the accelerator pedal and/or with an increasing accelerator pedal release speed $\frac{ds}{dt}$.

11. Device as claimed in claim 9 or 10, **characterized in that** the control unit (1) increases the proportionality factor of the pedal force when the sensed period T decreases, with a rising vehicle speed v, a great amount s of depression of the accelerator pedal before the commencement of release of the accelerator pedal and/or with an increasing accelerator pedal release speed $\frac{ds}{dt}$.

12. Device as claimed in at least one of claims 9 to 11, **characterized in that** the control unit (1) increases the brake force in relation to a detected distance from an advancing vehicle when the sensed period T decreases, with a rising vehicle speed v, a great amount s of depression of the accelerator pedal before the commencement of release of the accelerator pedal and/or with an increasing accelerator pedal release speed $\frac{ds}{dt}$.

13. Device as claimed in at least one of claims 7 to 12, **characterized in that** with a rising sensed period T ranging between the predetermined period $T_{limit1}$ and the predetermined period $T_{limit2}$, the extent of

    - the prefilling of the brake system,
    - the adaptation of the switching thresholds of the brake assist,
    - the adaptation of the deceleration proportional to pedal force,

    and/or

    - the adaptation of a distance-responsive brake assist is reduced and adopts an initial value when the predetermined period $T_{limit2}$ is reached.

14. Device as claimed in at least one of claims 1 to 13, **characterized in that** the control unit (1) assesses the signal course of the brake pedal application and causes

    - an adaptation of the switching thresholds of the brake assist,
    - an adaptation of the deceleration proportional to pedal force,

    and/or

    - an adaptation of a distance-responsive brake assist in dependence on the brake pedal position, the brake pedal depression speed and/or the brake pedal force.

15. Method for actuating a motor vehicle brake system, wherein

    - an accelerator pedal sensor (5) detects an accelerator pedal position,
    - a brake pedal sensor (4) detects a brake pedal actuation, and

    - a control unit (1) actuates the motor vehicle brake system based on signals of the accelerator pedal sensor (5), the brake pedal sensor (4) and a time acquisition element (3),

    wherein the control unit (1) with the time-acquisition element (3) acquires a time period T passing between a zero position of the accelerator pedal detected by the accelerator pedal sensor (5) and an application of the brake pedal detected by the brake pedal sensor (4), and influences the braking operation of the motor vehicle brake system in dependence on the sensed time period T,
    **characterized in that** the control unit (1) independently triggers a brake assist always when the sensed time period T lies below a predetermined period $T_{limit1}$.

**Revendications**

1. Dispositif de commande d'un système de freinage de véhicule automobile, comportant

    - un capteur de pédale d'accélérateur (5) pour reconnaître une position de la pédale d'accélérateur,

    - un capteur de pédale de frein (4) pour détecter un actionnement de la pédale de frein,

    - une unité de commande (1) pour commander le système de freinage du véhicule automobile et

    - un organe de détection du temps (3), l'unité de commande (1) commandant, sur la base de signaux du capteur de la pédale d'accélérateur (5), du capteur de la pédale de frein (4) et de l'organe de détection de temps (3), le système de freinage du véhicule automobile,

    dans lequel l'unité de commande (1) détecte, au moyen de l'organe de détection de temps (3), une durée T qui s'écoule entre une position neutre de la pédale d'accélérateur, détectée par le capteur de la pédale d'accélérateur (5), et un actionnement de la pédale de frein, détecté par le capteur de la pédale de frein (4), et agit, en fonction de la durée T détectée, sur le processus de freinage du système de freinage du véhicule automobile, **caractérisé en ce que** l'unité de commande (1) déclenche, de manière externe, une assistance au freinage lorsque la durée T détectée se situe au-dessous d'une durée $T_{grenz1}$ prédéterminée.

2. Dispositif selon la revendication 1, **caractérisé en ce que** le processus de freinage du système de freinage du véhicule automobile dépend d'une vitesse détectée de relâchement de la pédale d'accélérateur $\frac{ds}{dt}$.

3. Dispositif selon la revendication 1 ou 2, **caractérisé en ce que** le capteur de la pédale de frein (4), un capteur de la course de la pédale de frein et/ou un capteur de la force sur la pédale de frein détectent une course d'actionnement et/ou une force d'actionnement de la pédale de frein.

4. Dispositif selon la revendication 3, **caractérisé en ce que** lorsqu'un contact du pied du conducteur sur la pédale de frein est détecté, l'unité de commande (1) amène le système de freinage du véhicule automobile dans un état de veille et, en cas de détection d'une course d'actionnement de la pédale de frein, elle déclenche un processus de freinage.

5. Dispositif selon la revendication 4, **caractérisé en ce que** l'unité de commande (1) produit l'état de veille du système de freinage du véhicule automobile par application d'une pression d'admission dans le système de freinage du véhicule automobile.

6. Dispositif selon la revendication 1, **caractérisé en ce qu'**une transmission automatique rétrograde d'un cran lorsque la durée T détectée se situe au-dessous de la durée $T_{grenz1}$ prédéterminée.

7. Dispositif selon la revendication 1, **caractérisé en ce que** l'unité de commande (1) entraîne

  - un pré-remplissage du système de freinage et/ou

  - une adaptation de seuils de commande de l'assistance au freinage et/ou

  - une adaptation du ralentissement proportionnel à la force de la pédale et/ou

  - une adaptation d'une assistance au freinage dépendant de la distance,

  lorsque la durée T détectée se situe entre la durée $T_{grenz1}$ prédéterminée et une durée $T_{grenz2}$ prédéterminée, $T_{grenz2}$ étant supérieure à $T_{grenz1}$.

8. Dispositif selon la revendication 7, **caractérisé en ce que** le cran de marche d'une transmission automatique est conservé ou rétrogradé si la durée T détectée se situe entre la durée $T_{grenz1}$ prédéterminée et la durée $T_{grenz2}$ prédéterminée.

9. Dispositif selon la revendication 7, **caractérisé en ce que** le pré-remplissage du système de freinage, l'adaptation des seuils de commande de l'assistance au freinage, l'adaptation du ralentissement proportionnel à la force de la pédale et/ou l'adaptation de l'assistance au freinage dépendant de la distance sont exécutés indépendamment d'un diagramme caractéristique (2) et/ou d'un calcul dépendant d'une formule, et on utilise comme grandeurs d'entrée pour le diagramme caractéristique (2) et/ou le calcul dépendant d'une formule, la durée T détectée, la vitesse du véhicule v, la position de la pédale d'accélérateur s et/ou une vitesse de relâchement de la pédale d'accélérateur $\frac{ds}{dt}$.

10. Dispositif selon la revendication 9, **caractérisé en ce que** lorsque la durée T détectée diminue, lorsque la vitesse du véhicule v augmente, lorsque la distance d'enfoncement s de la pédale d'accélérateur est grande avant le début du relâchement de la pédale d'accélérateur et/ou dans le cas où la vitesse de relâchement de la pédale d'accélérateur $\frac{ds}{dt}$ augmente, l'unité de commande (1) réduit les seuils de commande de l'assistance au freinage.

11. Dispositif selon la revendication 9 ou 10, **caractérisé en ce que** lorsque la durée T détectée diminue, lorsque la vitesse du véhicule v augmente, dans le cas d'une grande course d'enfoncement s de la pédale d'accélérateur avant le début du relâchement de la pédale d'accélérateur et/ou dans le cas où la vitesse de relâchement de la pédale d'accélérateur $\frac{ds}{dt}$ augmente, l'unité de commande (1) augmente le facteur de proportionnalité de la force de la pédale.

12. Dispositif selon l'une au moins des revendications 9 à 11, **caractérisé en ce que** lorsque la durée T détectée diminue, lorsque la vitesse du véhicule v augmente, dans le cas d'une grande course d'enfoncement s de la pédale d'accélérateur avant le début du relâchement de la pédale d'accélérateur et/ou dans le cas où la vitesse de relâchement de la pédale d'accélérateur $\frac{ds}{dt}$ augmente, l'unité de commande (1) augmente la force de freinage en fonction d'une distance détectée par rapport à un véhicule précédent.

13. Dispositif selon l'une au moins des revendications 7 à 12, **caractérisé en ce que** lorsque la durée T détectée, qui se situe entre la durée $T_{grenz1}$ prédéterminée et la durée $T_{grenz2}$ prédéterminée, augmente, la valeur

  - du pré-remplissage du système de freinage,

  - de l'adaptation des seuils de commande de l'assistance au freinage,

  - de l'adaptation du ralentissement proportionnel à la force de la pédale

et/ou

- de l'adaptation de l'assistance au freinage dépendant de la distance, est diminuée et, lorsque est atteinte la durée $T_{grenz2}$ prédéterminée, elle prend une valeur initiale.

**14.** Dispositif selon l'une au moins des revendications 1 à 13, **caractérisé en ce que** l'unité de commande (1) exploite la variation du signal de l'actionnement de la pédale de frein et provoque, en fonction de la position de la pédale de frein, de la vitesse d'enfoncement de la pédale de frein et/ou de la force sur la pédale de frein,

- une adaptation des seuils de commande de l'assistance au freinage,

- une adaptation du ralentissement proportionnel à la force de la pédale et/ou

- une adaptation d'une assistance au freinage dépendant de la distance.

**15.** Procédé de commande d'un système de freinage de véhicule automobile dans lequel

- un capteur de pédale d'accélérateur (5) détecte une position de la pédale d'accélérateur,

- un capteur de pédale de frein (4) détecte un actionnement de la pédale de frein et

- une unité de commande (1) commande le système de freinage de véhicule automobile sur la base de signaux du capteur de la pédale d'accélérateur (5), du capteur de la pédale de frein (4) et d'un organe de détection de temps (3),

dans lequel l'unité de commande (1) détecte avec l'organe de détection de temps (3) une durée T qui s'écoule entre une position neutre, détectée par le capteur de la pédale d'accélérateur (5), de la pédale d'accélérateur et un actionnement de la pédale de frein, détecté par le capteur de la pédale de frein (4), et agit, en fonction de la durée T détectée, sur le processus de freinage du système de freinage de véhicule automobile, **caractérisé en ce que** l'unité de commande (1) déclenche de manière externe une assistance au freinage dans tous les cas où la durée T détectée se situe au-dessous d'une durée $T_{grenz1}$ prédéterminée.

# Fig. 1

# Fig. 2

# Fig. 3

EP 1 100 703 B1

```
        ( 1 )
          │
          │
          ▼
  ┌─────────────────────┐ 200                    ┌─────────────────────┐ 202
 ╱                       ╲          nein         ╱                       ╲
│ T_grenz1 ≤ T ≤ T_grenz2 ? │ ──────────────────▶ │     T > T_grenz2 ?    │
 ╲                       ╱                        ╲                       ╱
  └──────────┬──────────┘                          └──────────┬──────────┘
             │ ja                                             │ ja
             ▼                                                ▼
  ┌──────────────────┐ 201                         ┌──────────────────┐ 203
  │   Maßnahmen II    │         ( 2 )              │   Maßnahmen III   │         ( 2 )
  │   = f ( T,② )     │ ◀──────                    │   = f ( T,② )     │ ◀──────
  └──────────────────┘                             └──────────────────┘
```

$T_{grenz1} \leq T \leq T_{grenz2}$ ?

$T > T_{grenz2}$ ?

Maßnahmen II $= f ( T, ② )$

Maßnahmen III $= f ( T, ② )$

# Fig. 4